# EUROPEAN PATENT APPLICATION

(11) **EP 3 872 498 A1**
(43) Date of publication of application: **01.09.2021**
(21) Application number: 19875644.7
(22) Date of filing: 21.10.2019
(51) Int. Cl.: G01N 35/04

(54) **AUTOSAMPLER, AUTOMATIC ANALYSIS DEVICE, SAMPLING METHOD, AND AUTOMATIC INSPECTION METHOD**

(30) Priority: 23.10.2018 JP 2018198899
(71) Applicant: Sekisui Medical Co., Ltd., Tokyo 103-0027 (JP)
(72) Inventor: KAWABE, Toshiki, Tokyo 103-0027 (JP)
(74) Representative: Schäfer, Matthias W.
(86) International application number: PCT/JP2019/041243
(87) International publication number: WO 2020/085271

(57) **Abstract**

Provided is a small and high-performance autosampler.

An installation part 6 allowing a plurality of racks 4 to be installed therein, a transfer part 7 capable of holding one rack 4 installed in the installation part 6 and moving back and forth in a first movement direction D1 along an installation direction, and a rack transport path 15 used to move the rack 4 held by the transfer part 7 back and forth in a second movement direction D2 intersecting the first movement direction D1 are included, in which the transfer part 7 is moved forward in the first movement direction D1 to transfer the rack 4 present in the installation part 6 to a side of the rack transport path 15, and the transfer part 7 is moved backward in the first movement direction D1 to send the rack present in the rack transport path 15 back to a side of the installation part 6.

## Description

### TECHNICAL FIELD

The present invention relates to an autosampler and a sampling method for automatically collecting specimens from a specimen container, and an automatic analysis device and an automatic analysis method adopting the same.

### BACKGROUND ART

In general, some automatic analysis devices for biological samples such as blood and urine automatically transport a plurality of specimen containers containing specimens and perform successive analysis. For example, an automatic analysis device disclosed in Patent Document 1 includes a rack set part (62), a rack transfer part (65), a specimen suction part (67), a rack buffer part (68), a rack recovery part (63), etc. Further, a rack (9) holding a predetermined number of specimen containers is transported between these parts, and the rack (9) from which an inspection result is obtained is sent to the rack recovery part (63) (paragraphs 0037 to 0040, etc.).

Further, in an automatic analysis device disclosed in Patent Document 2, a rack (3) holding a predetermined number of specimen containers is installed in a predetermined installation part (11) and transported in a predetermined direction (D1). Further, in Patent Document 2, when the rack (3) after completion of inspection is replaced with a rack not undergoing inspection, the installation part (11) on which the rack (3) is installed moves in a direction opposite to a previous movement direction.

### CITATION LIST

### PATENT DOCUMENT

Patent Document 1: JP 2010-181197 A
Patent Document 2: JP 5842785 B2

### SUMMARY OF THE INVENTION

### PROBLEM TO BE SOLVED BY THE INVENTION

Incidentally, in the automatic analysis device of the type disclosed in Patent Document 1, the rack set part (62), the rack buffer part (68), and the rack recovery part (63) are provided, and it is necessary to ensure an installation space for each part in the automatic analysis device. For this reason, the automatic analysis device tends to be large.

On the other hand, in the automatic analysis device of the type disclosed in Patent Document 2, the installation part (11) on which the rack is installed moves in a positive direction and a reverse direction with respect to the installation part movement direction (D1). For this reason, when compared to the automatic analysis device of the type disclosed in Patent Document 1, a mechanical configuration related to movement of the rack is simple, and the autosampler and the automatic analysis device can be miniaturized. This type of automatic analysis device is suitable for a small automatic analysis device (and an autosampler) due to the simple mechanical configuration. However, there is no disclosure about another requirement at an inspection site, that is, preventing, in advance, a situation in which measurement needs to be suspended due to lack of reagents after start of analysis, and high performance having such a function is required. However, since the mechanical configuration is simple, in the case of considering further improvement in performance of the small automatic analysis device (and the autosampler), positions that can be improved are limited, and improvement in performance is difficult. In addition, even though this device is smaller than the automatic analysis device of the type of Patent Document 1, a space corresponding to about two installation parts is required in the installation part movement direction (D1), and there was a limit to miniaturization (narrowing) in the direction (D1).

The invention has been made to solve such a problem, and an object of the invention is to provide a small and high-performance autosampler and an automatic analysis device using the same. In addition, another object of the invention is to provide a sampling method capable of improving performance of a small autosampler, and an automatic analysis method using the same.

### MEANS FOR SOLVING PROBLEM

(1) To achieve the objects, the invention is an autosampler for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the autosampler including
   an installation part allowing a plurality of racks to be installed therein,
   a transfer part capable of holding one rack installed in the installation part and moving back and forth in a first movement direction along an installation direction, and
   a rack transport path used to move the rack held by the transfer part back and forth in a second movement direction intersecting the first movement direction,
   in which the transfer part is moved forward in the first movement direction to transfer the rack present in the installation part to a side of the rack transport path, and the transfer part is moved backward in the first movement direction to send the rack present in the rack transport path back to a side of the installation part.
(2) In addition, to achieve the objects, another invention is the autosampler according to item (1), in which the installation part waits for the rack after inquiring about the inspection item until the sampling, and the sampling is started after completing accumulation of information about the inspection item using the specimen container on the installation part as a unit.
(3) Further, the invention is an automatic analysis device including the autosampler according to item (1) or (2) .
(4) In addition, to achieve the objects, another invention is a sampling method for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device,
   the method using an autosampler including
   an installation part allowing a plurality of racks to be installed therein,
   a transfer part capable of holding one rack installed in the installation part and moving back and forth in a first movement direction along an installation direction, and
   a rack transport path used to move the rack held by the transfer part back and forth in a second movement direction intersecting the first movement direction,
   the method including
   a first step of moving the transfer part forward in the first movement direction to transfer the rack present in the installation part to a side of the rack transport path,
   a second step of waiting for, by the installation part, the rack after inquiring about the inspection item until the sampling, and starting the sampling after completing accumulation of information about the inspection item using the specimen container on the installation part as a unit, and
   a third step of moving the transfer part backward in the first movement direction to send the rack present in the rack transport path back to a side of the installation part.
(5) Further, the invention is a method of automatically inspecting a specimen performed using a specimen sampled by the sampling method according to item (4).

### EFFECT OF THE INVENTION

According to the above configuration, it is possible to provide a small and high-performance autosampler and an automatic analysis device using the same. In addition, according to the above configuration, it is possible to provide a sampling method capable of improving performance of a small autosampler, and an automatic analysis method using the same.

### BRIEF DESCRIPTION OF DRAWINGS

Fig. 1(a) is a schematic plan view illustrating an autosampler according to an embodiment of the invention, Fig. 1(b) is a perspective view illustrating a rack and an installation part, and Fig. 1(c) is a perspective view illustrating the rack and the installation part from a direction different from that of Fig. 1(b);
Fig. 2 is a block diagram illustrating an outline of a controller and peripheral equipment thereof;
Figs. 3(a) to 3(e) are explanatory views illustrating processes of sampling after checking the amount of reagent in order;
Figs. 4(a) to 4(e) are explanatory views illustrating processes of sampling after checking the amount of reagent following Fig. 3(e) in order;
Figs. 5(a) to 5(e) are explanatory views illustrating processes of sampling after checking the amount of reagent following Fig. 4(e) in order;
Figs. 6(a) to 6(d) are explanatory views illustrating processes of sampling after checking the amount of reagent following Fig. 5(e) in order;
Figs. 7(a) to 7(d) are explanatory views illustrating processes of sampling of a conventional method in order; and
Figs. 8(a) to 8(c) are explanatory views illustrating processes of sampling of the conventional method following Fig. 7(d) in order.

### MODE(S) FOR CARRYING OUT THE INVENTION

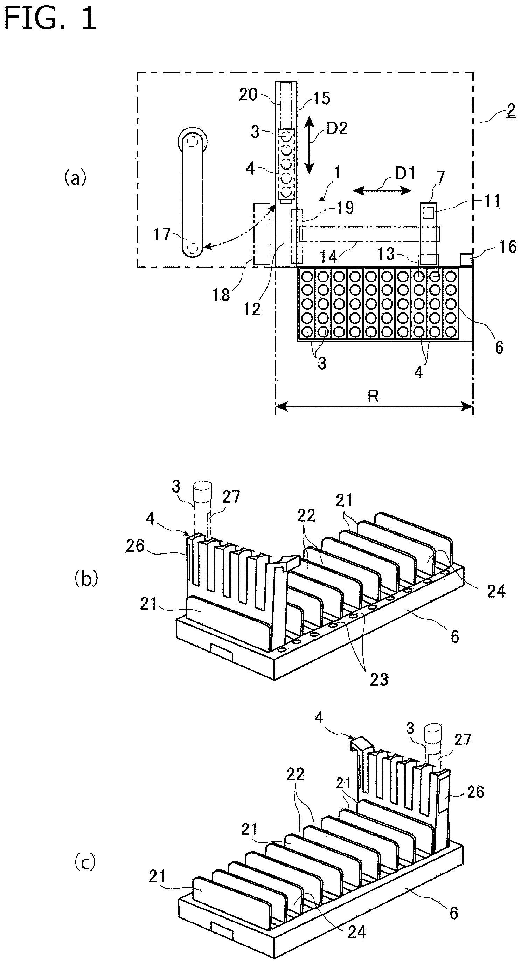

An autosampler according to an embodiment of the invention, an automatic analysis device including the autosampler, and a sampling method will be described with reference to the drawings. Fig. 1(a) illustrates an autosampler 1 according to the present embodiment. The autosampler 1 is included in an automatic analysis device 2 used for, for example, blood coagulation, biochemical test, immunological test, etc., and can automatically and successively transport a plurality of specimen containers 3 (here, 5 containers/rack × 10 racks) containing specimens in a direction D1. Here, the automatic analysis device 2 is configured to include the autosampler 1. However, in Fig. 1(a), in order to simplify the illustration, a part of the automatic analysis device 2 in the vicinity of the autosampler 1 is surrounded by an alternate long and short dash line.

The specimen container 3 contains specimens (in addition, a calibrator, control samples, and normal plasma), and is set in the autosampler 1 in a state of being held by a rack 4. In the present embodiment, a maximum of five specimen containers 3 can be held in one rack 4. However, the invention is not limited thereto, and one to four racks may be held with a vacancy in each rack 4. Further, the number of specimen containers 3 that can be held by the rack 4 is not limited to five, and may be fewer or more.

The autosampler 1 includes an installation part 6 (rack tray), and a plurality of racks 4 can be installed on the installation part 6. In the present embodiment, ten racks 4 can be installed on the installation part 6. However, the invention is not limited thereto, and the maximum loadable number of racks 4 that can be installed on the installation part 6 can be appropriately changed.

A rack transfer part (hereinafter referred to as "transfer part") 7 as a rack transfer means is provided at a position adjacent to the installation part 6. The transfer part 7 can be moved along a transfer part transport path 14 in both a leftward direction and a rightward direction in Fig. 1(a) by a transfer part movement mechanism 11. This movement direction is a direction parallel to a direction in which the racks 4 are arranged in the installation part 6 (arranging direction of the racks 4). The movement direction of the transfer part 7 is hereinafter referred to as "first movement direction D1".

The transfer part movement mechanism 11 may include, for example, a rail that movably supports the transfer part 7, a drive source such as a motor (not illustrated), and a power transmission mechanism such as a transport belt or gear. Further, the first movement direction D1 includes a forward direction (direction from right to left in the figure) which is a predetermined direction and a backward direction (direction from left to right in the figure) which is a reverse direction with respect to the forward direction. Note that as the transfer part movement mechanism 11, it is possible to adopt various general movement mechanisms.

In the autosampler 1, the respective racks 4 in the installation part 6 are sent out one by one along a second movement direction D2 for analysis. The second movement direction D2 is a direction intersecting with (here, orthogonal to) the first movement direction D1. That is, in the present embodiment, the installation part 6 is fixed at a certain position. Further, the transfer part 7 moves in the forward direction (direction from right to left in the figure) of the first movement direction D1 and stops at a position on the installation part 6 facing a target rack 4. Thereafter, the rack 4 is sent out from the installation part 6 along the second movement direction D2 orthogonal to the first movement direction D1.

In addition, the rack 4 is moved from the installation part 6 to the transfer part 7 by a first rack movement mechanism 13. Although not illustrated, the first rack movement mechanism 13 may include, for example, a drive source such as a motor and a power transmission mechanism such as a transport belt or gear. Note that as the first rack movement mechanism 13, it is possible to adopt various general movement mechanisms. Further, the first rack movement mechanism 13 can be configured according to a structure for allowing the rack 4 to be attached and detached. In addition, the second movement direction D2 includes a forward direction (direction from bottom to top in the figure) in which the rack 4 is sent out from the installation part 6 and a backward direction (direction from top to bottom in the figure) in which the rack 4 is sent back to the installation part 6.

Here, the first rack movement mechanism 13 may include a drawer part (or an extruding extrusion part) that slides and draws out the rack 4 from the installation part 6. Further, as the drawer part, it is possible to adopt various general types such as an arm type and a suction type. In addition, as the extrusion part, it is possible to adopt various general types. Further, it is possible to use both the drawer part and the extrusion part.

In addition, the first rack movement mechanism 13 may be provided in the installation part 6 or provided in the transfer part 7. Further, the first rack movement mechanism 13 may include a combination of both mechanical portions provided in the installation part 6 and the transfer part 7.

When the rack 4 is received via the first rack movement mechanism 13, the transfer part 7 is moved by the transfer part movement mechanism 11 in the forward direction (direction from right to left in the figure) in the first movement direction D1 and approaches the rack transport path (sampling lane) 15. Further, the rack 4 in the transfer part 7 is sent to the rack transport path 15 and moves on the rack transport path 15. Then, the rack 4 transferred to the rack transport path 15 is transported from the transfer part 7 in the forward direction of the second movement direction D2.

The rack 4 moves between the transfer part 7 and the rack transport path 15 (moves back and forth in the direction D1) by a second rack movement mechanism 19. Although not illustrated, the second rack movement mechanism 19 may include, for example, a drive source such as a motor and a power transmission mechanism such as a transport belt or gear. Note that as the second rack movement mechanism 19, it is possible to adopt various general movement mechanisms.

In addition, similarly to the first rack movement mechanism 13, the second rack movement mechanism 19 may include a drawer part (or extrusion part). Further, the second rack movement mechanism 19 may be provided in the transfer part 7 or provided in the rack transport path 15. In addition, the second rack movement mechanism 19 may include a combination of both mechanical portions provided in the transfer part 7 and the rack transport path 15.

Further, the rack 4 moves on the rack transport path 15 (moves back and forth in the direction D2) by a third rack movement mechanism 20. Although not illustrated, the third rack movement mechanism 20 may include, for example, a drive source such as a motor and a power transmission mechanism such as a transport belt or gear. Note that as the third rack movement mechanism 20, it is possible to adopt various general movement mechanisms.

For example, each of the racks 4 is provided with an identification information recording part 26 (Figs. 1(b) and 1(c)) such as a barcode. In addition, each of the specimen containers 3 is provided with an identification information recording part 27. Each of the identification information recording parts 26 and 27 can be formed by attaching a label sticker to a predetermined site of the rack 4 or the specimen container 3. Here, a more specific configuration of the rack 4 and the installation part 6 will be described later.

In the present embodiment, as illustrated in Fig. 1(a), before the rack 4 is sent out from the transfer part 7 to a transport position 12 on the rack transport path 15, identification information of the rack 4 or the specimen container 3 is read by a reading part 16. The reading part 16 does not move in a horizontal direction along the first movement direction D1 and can irradiate the rack 4 in the transfer part 7 with detection light from a fixed position to read identification information of the rack 4 or the specimen container 3. Further, the reading part 16 can be moved in the horizontal direction. Here, the reading part 16 may be provided separately for the specimen container 3 and the rack 4.

When the identification information read by the reading part 16 is read, the identification information is successively transmitted to a controller 31 described later, and is used as information for controlling various functions such as transport and sampling. A configuration of the controller 31 and specific processing based on the identification information will be described later.

The rack 4 sent out to the rack transport path 15 is moved in the forward direction of the second movement direction D2 by the third rack movement mechanism 20. Then, the rack 4 is temporarily stopped on the rack transport path 15, and a specimen collection mechanism 17 collects (samples) a specimen from the specimen container 3 held in the rack 4.

The specimen collection mechanism 17 includes, for example, a rotation mechanism, an elevating mechanism, a rotation mechanism, etc., and a movable portion includes these mechanisms. Further, a nozzle for collecting a specimen (not illustrated) is provided at a distal end of the movable portion. Furthermore, in one example, after rotating from a standby position to move the nozzle to an upper part of the specimen container 3, the specimen collection mechanism 17 can lower the nozzle to suck the specimen in the specimen container 3, and then raise the nozzle to rotate and move the nozzle to a discharge position. At the discharge position, the specimen collection mechanism 17 lowers the nozzle and discharges the specimen into a reaction vessel disposed in advance, so that a certain amount of the specimen is discharged. Thereafter, the specimen collection mechanism 17 raises the nozzle and further rotates and moves the nozzle to a cleaning position (not illustrated) . Then, the specimen collection mechanism 17 cleans the nozzle, and returns the nozzle to the standby position by rotating and moving the nozzle after cleaning. Thereafter, a reagent is added to the reaction vessel, reaction is carried out for a predetermined reaction time, and then a reaction solution is optically measured. Note that it is natural that this procedure is an example and use for other chemical analyzes is allowed.

After the specimens are collected from all the specimen containers 3 held in the rack 4, the rack 4 is transported in the backward direction of the second movement direction D2 and sent back to the transfer part 7. In this way, from when the rack 4 is moved to the rack transport path 15 until the rack is sent back to the transfer part 7 after collection of the specimens, the transfer part 7 can be in a stopped state, and a barcode of a newly installed rack can be read (note that specimens may be collected from only a predetermined specimen container 3 according to a program). In addition, after the rack 4 undergoing collection of specimens is sent back to the transfer part 7, the transfer part 7 moves in the backward direction of the first movement direction D1, and the rack 4 is returned to an original position in the installation part 6.

In addition, a case where a rack is replaced or added during analysis can be given as an example of a case where the transfer part 7 is moved. In addition, a case where re-inspection is performed, etc. may be given as an example.

In order to increase a degree of freedom of movement of the transfer part 7, a degree of freedom of replacement of the rack 4, etc., it is possible to provide a rack retracting part 18 at a portion past the rack transport path 15. By temporarily placing the rack 4 being transferred in such a rack retracting part 18, it is possible to reliably form an empty portion where the rack 4 is not installed in the installation part 6, and it is possible to flexibly deal with abrupt addition of the rack 4. For example, during specimen sampling of a rack A as normal sampling, when a rack B on which an emergency specimen is placed is interrupted "between specimens (for example, after sampling of a first specimen of the rack A is completed) ", use is allowed in the following order of 1) to 4). That is, 1) first sampling (related to the specimen container) of the rack A is completed, 2) the rack A is retracted, 3) sampling of the rack B is performed, and 4) sampling is restarted from second sampling (related to the specimen container) of the rack A.

In the present embodiment, during a pre-suction preparation period in which the nozzle of the specimen collection mechanism 17 rotates from the standby position and moves to the upper part of the specimen container 3, an operation for sending out the rack 4 from the transport position 12 (including a reading operation by the reading part 16) is performed. In the pre-suction preparation period, in a process of rotating the nozzle of the specimen collection mechanism 17 from the standby position, a buffer solution, etc. to be discharged to the reaction vessel at the same time as the specimen may be sucked.

In addition, after a nozzle of the specimen collection mechanism 17 sucks the specimen in the specimen container 3, during a discharge period from when the nozzle of the specimen collection mechanism 17 starts to rotate to a discharge position until the nozzle of the specimen collection mechanism 17 finishes rising after discharging the specimen at the discharge position, an operation for sending the rack 4 back to the transfer part 7 is performed. Further, after the discharge period, during a cleaning period in which the specimen collection mechanism 17 rotates to perform cleaning, an operation for moving the transfer part 7 to bring another rack 4 closer to the transport position 12 is performed.

In this way, by performing an operation for moving the rack 4 or the transfer part 7 using a period during which the specimen collection mechanism 17 is performing an operation other than an operation with respect to the rack 4, it is possible to prevent throughput from decreasing.

Next, the installation part 6 on which the rack 4 is installed will be described more specifically. Figs. 1(b) and 1(c) illustrate an example of the rack 4 and the installation part 6. In the example of Figs. 1(b) and 1(c), a plurality of partition plates 21 is provided at certain intervals on the installation part 6. Further, an installation region 22 for installing the rack 4 is formed between adjacent partition plates 21. Furthermore, the rack 4 is installed in the installation region 22 so that the rack 4 can move in the forward direction of the second movement direction D2. Here, in Figs. 1(b) and 1(c), only one rack 4 is installed on the installation part 6, and only one specimen container 3 is held in the rack 4 as indicated by an alternate long and two short dashes line. In addition, as a configuration for individually detachably holding the rack 4, it is possible to adopt various general configurations such as one fit in a slide groove, one holding the rack 4 by a locking mechanism, etc.

A rack state lamp 23 is disposed in the installation part 6 in association with each installation region 22 individually. Each rack state lamp 23 can report a state of each rack 4 in the corresponding installation region 22 in units of racks. In the present embodiment, each rack state lamp 23 indicates whether each rack 4 is in an uninspected state, an inspecting state (including a re-inspecting state), or an inspection completed state by a color or a light emission mode such as blinking.

Here, the uninspected state is a state before the corresponding rack 4 is sent out from the transport position 12, and means a state in which the specimen in the specimen container 3 held in the rack 4 has not been inspected. In addition, the inspecting state is a state in which inspection for the rack 4 sent back to the installation part 6 is being executed (including a state during sampling and a state in which re-inspection is required), and means a state in which the rack 4 should not be removed from the installation part 6. Further, the inspection completed state is a state in which inspection for the rack 4 sent back to the installation part 6 has been completed, and means that there is no problem even when the rack 4 is removed from the installation part 6.

In the present embodiment, each rack state lamp 23 is turned ON when in the uninspected state, blinks in the inspecting state, and is turned OFF in the inspection completed state. However, the invention is not limited to such a configuration, and it is possible to adopt a configuration in which each rack state lamp 23 reports at least one of the above-mentioned states by emitting light in a different light emission mode.

In addition, a reporting part for reporting a state of each rack 4 is not limited to one that emits light such as the rack state lamp 23, and it is possible to adopt various configurations such as one that reports a rack position distinguished by dial tone from a speaker, and a combination thereof. Note that it is possible to configure the installation part 6 so that the reporting part is not included. Note that as a configuration in which the reporting part is not included, for example, a display device (not illustrated) included in the automatic analysis device 2 may display the state of the rack 4.

In addition, in the present embodiment, some (here, one) of a plurality of installation regions 22 is defined as a priority installation part 24. The priority installation part 24 constitutes a priority installation part 24 for installing a rack 4 to be subjected to inspection preferentially. Here, it is preferable that the priority installation part 24 is provided in such a manner that an operator can distinguish the priority installation part 24 from other installation regions 22.

When a rack 4 is installed in such a priority installation part 24, the transfer part movement mechanism 11 (Fig. 1(a)) moves the rack 4 in the priority installation part 24 to the transfer part 7 in preference to a rack 4 placed in another installation region 22. Then, the rack 4 in the priority installation part 24 sent out to the transfer part 7 is sent to the rack transport path 15 side by the transfer part 7.

Although only one is illustrated in Figs. 1(b) and 1(c), each rack 4 installed on the installation part 6 has a shape that can hold test tube-shaped specimen containers 3 (only one is illustrated by an alternate long and two short dashes line in the figure) upright and side by side. In each rack 4, a predetermined number (here, five) of specimen containers 3 can be held along a longitudinal direction thereof. Each rack 4 is installed on the installation part 6 in a state where the longitudinal direction extends along the second movement direction D2.

Further, each rack 4 is provided with the above-mentioned identification information recording part 26. As the identification information recording part 26, one having a barcode display can be adopted. However, the invention is not limited thereto, and it is possible to adopt various recording media such as those displaying a two-dimensional code, IC chips, or those incorporating an RF tag for RFID.

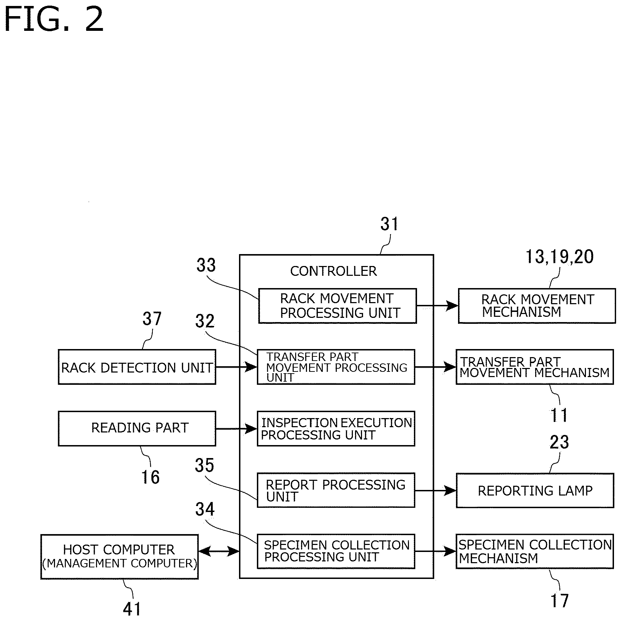

Next, the above-mentioned controller 31 will be described. Fig. 2 schematically illustrates a configuration of the controller 31. The controller 31 is configured by combining a CPU, ROM, RAM, input/output ports, etc., and operates based on a predetermined program. Further, the controller 31 operates as various functional units such as a transfer part movement processing unit 32, a rack movement processing unit 33, a specimen collection processing unit 34, and a report processing unit 35. Here, the controller 31 may control the operation of the entire analysis device. Further, for example, the controller may be divided for each partial configuration of the autosampler 1, etc., and the controller 31 may be configured by a plurality of controllers.

Of the various functional units described above, the transfer part movement processing unit 32 has a function of controlling the operation of the transfer part movement mechanism 11 to move the transfer part 7 along the first movement direction D1. The transfer part movement processing unit 32, the transfer part movement mechanism 11, etc. are included in a transfer part moving means. By moving the transfer part 7, the transfer part moving means successively moves the racks 4 transferred to the transfer part 7 to the rack transport path 15 side.

Next, the rack movement processing unit 33 has a function of controlling operations of the first rack movement mechanism 13, the second rack movement mechanism 19, and the third rack movement mechanism 20 to move the rack 4 from the installation part 6 to the transfer part 7 or from the transfer part 7 to the rack transport path 15 along the first movement direction D1 or the second movement direction D2. The rack movement processing unit 33, the first rack movement mechanism 13, the second rack movement mechanism 19, and the third rack movement mechanism 20 are included in a rack moving means.

Further, the specimen collection processing unit 34 performs a process for controlling an operation of the specimen collection mechanism 17. The specimen collection processing unit 34, the specimen collection mechanism 17, etc. are included in a specimen collecting means. The specimen collecting means collects a specimen from the specimen container 3 in the rack 4 sent out from the installation part 6.

In addition, the specimen collection processing unit 34 is included in an inspection executing means that inspects the collected specimen. The inspection executing means stores an inspection result for each rack 4 in a predetermined storage unit (not illustrated) in association with identification information read from the identification information recording part 26.

The report processing unit 35 has a function of controlling the light emission mode of each rack state lamp 23 based on the inspection result by the specimen collection processing unit 34. Further, the report processing unit 35 reports the state of the rack 4 corresponding to each rack state lamp 23. The report processing unit 35, each rack state lamp 23, etc. are included in a reporting means for reporting whether or not an inspection for each rack 4 is being executed.

Whether or not the rack 4 is installed in each installation region 22 of the installation part 6 can be detected by a rack detection unit 37. The rack detection unit 37 can be provided in the installation part 6 in association with each installation region 22. The rack detection unit 37 can include, for example, various non-contact type sensors, image recognition sensors, etc. Further, as the non-contact type sensors, it is possible to adopt various general optical sensors, proximity sensors (induction type proximity sensor, capacitance type proximity sensor), etc. However, the invention is not limited thereto, and various types can be adopted as long as it is possible to detect the presence or absence of the rack 4.

In the present embodiment, when the rack 4 is sent back to the installation part 6, the transfer part 7 is moved back and forth by the transfer part movement processing unit 32. Then, racks 4 not undergoing inspection are moved to the transfer part 7 and successively moved to the transport position 12 on the rack transport path 15. In addition, this description is similarly applied to a case where any rack 4 is replaced with a rack 4 not undergoing inspection after inspection is completed.

Note that whether or not the rack 4 is sent back to the installation part 6 can be determined by the controller 31 based on, for example, the end of processing by the rack movement processing unit 33 or a detection signal from the rack detection unit 37. Furthermore, whether or not any rack 4 after completion of inspection is replaced with the rack 4 not undergoing inspection can be determined based on, for example, a detection signal from the rack detection unit 37. In addition, whether or not it is necessary to perform re-inspection for any rack 4 can be determined based on a determination result by a re-inspection necessity determination unit (not illustrated).

As described above, in the present embodiment, by moving the transfer part 7 back and forth, it is possible to transport each of the rack 4 not undergoing inspection installed in the installation part 6, the rack 4 not undergoing inspection replaced after inspection is completed, and the rack 4 requiring re-inspection to the transport position 12. Therefore, by replacing the racks 4 undergoing inspection with the racks 4 not undergoing inspection in order, it is possible to continuously perform inspection for the racks 4 whose number is larger than the number of racks 4 that can be installed in the installation part 6.

Further, in the present embodiment, the rack 4 from which the specimen is collected on the rack transport path 15 is returned to the installation part 6 through the transfer part 7. Therefore, when compared to an automatic analysis device of a type in which a rack is temporarily retracted to a buffer part (for example, the type of the above-mentioned Patent Document 1), a lane or space for temporary storage of the rack is unnecessary, and it is possible to miniaturize the autosampler 1 and the automatic analysis device 2.

In addition, for example, when compared to a configuration in which the installation part 6 is moved in the first movement direction D1 (transfer part movement direction) (for example, the type of the above-mentioned Patent Document 2), it is unnecessary to ensure a space for moving the installation part 6, and it is possible to reduce a width of the automatic analysis device 2 (a total width R of the installation part 6 and the rack transport path 15 illustrated in Fig. 1(a)) . Thus, the device can be miniaturized accordingly. In addition, since the moving range of the racks 4 can be narrowed, even when the rack 4 requiring re-inspection is moved to the rack transport path 15 again, a moving time of the rack 4 can be shortened, and inspection efficiency can be improved.

Here, in Fig. 1(a), since the specimen collection mechanism 17 is provided not on the side where the installation part 6 is disposed but on the opposite side of the rack transport path 15 as a boundary, the width of the autosampler 1 (and the automatic analysis device 2) is increased accordingly. However, although not illustrated, by disposing the specimen collection mechanism 17 on the same side as the installation part 6 with reference to the rack transport path 15, the width of the autosampler 1 (and the automatic analysis device 2) can be reduced.

In addition, since the installation part 6 and the transfer part 7 are disposed in the second movement direction D2, a space therefor is required in the second movement direction D2. However, when the needs of the autosampler 1 and the automatic analysis device 2 are such that miniaturization in the direction of the first movement direction D1 is prioritized over miniaturization in the second movement direction D2, the configuration of the present embodiment is effective. Further, in a case where another constituent device installed in the second movement direction D2 is miniaturized, even when the configuration of the present embodiment is adopted, it is possible to minimize the increase in size of the automatic analysis device 2 as a whole.

Further, since the rack 4 is transported by moving the transfer part 7 smaller than the installation part 6 without moving the installation part 6, the moving range of the transfer part 7 can be generally within the width of the installation part 6. In addition, even though the reading part 16 is fixed at a fixed position in the example of Fig. 1 (a), since the moving range of the transfer part 7 is limited to a certain size (here, a size of about ten racks 4 arranged in parallel), even when the reading part 16 is installed at the fixed position so as not to move, a distance to the identification information recording part 26 is relatively short, and reading of the identification information recording part 26 is not difficult.

In addition, by combining the installation part 6 and the transfer part 7, it is possible to exhibit a rack set function, a rack buffer function, and a rack recovery function in the above-mentioned Patent Document 1 (JP 2010-181197 A). Therefore, inspection can be performed with a small number of functional parts, which makes it possible to reduce the size of the autosampler 1 and the automatic analysis device 2.

Further, since the installation part 6 does not move, when the rack 4 returned to the installation part 6 is recovered, it is unnecessary for the operator to wait for the installation part 6 to stop and then recover the rack 4. For this reason, it is possible to rapidly recover the rack 4 returned to the installation part 6.

In addition, in the present embodiment, when the rack 4 is installed in the priority installation part 24 of the installation part 6 by processing of the transfer part movement processing unit 32, the rack 4 installed in the priority installation part 24 can be preferentially moved to the transport position 12. Note that whether or not the rack 4 is installed in the priority installation part 24 of the installation part 6 can be determined based on, for example, a detection signal from the rack detection unit 37.

In this way, by preferentially moving the rack 4 installed in the priority installation part 24 to the transport position 12 and sending out the rack 4 from the transport position 12, it is possible to preferentially perform inspection for the rack 4. In this case, it is unnecessary to perform an operation of designating the rack 4 to be subjected to inspection preferentially, etc., and operability can be improved. Further, it is possible to perform inspection preferentially without providing a rack set portion for emergency specimens, etc. in a portion other than the installation part 6.

Further, in the present embodiment, whether or not inspection for each rack 4 is being executed is verified based on reporting by the rack state lamp 23, and the rack 4 for which inspection is not being executed can be replaced with another rack 4. In this way, it is possible to facilitate an operation of replacing the rack 4 with respect to the installation part 6, so that the inspection efficiency can be improved.

In particular, in the present embodiment, the uninspected state, the inspecting state, and the inspection completed state are checked based on reporting by the rack state lamp 23, and the rack 4 not in the inspected state can be replaced with another rack 4. For example, inspection can be continuously performed by successively replacing the racks 4 in the inspection completed state with the racks 4 not undergoing inspection. In addition, the rack 4 in the uninspected state can be replaced with another rack 4 as necessary. In this way, by reporting the state of the rack 4 in an easy-to-understand manner, the inspection efficiency can be effectively improved. Further, when there is a specimen container which remains in the uninspected state and is put off, the presence of a rack holding such a specimen container can be reported by, for example, the rack state lamp 23. Then, from these facts, it is possible to perform a flexible inspection according to the state of the rack without providing a rack set portion according to the state of the rack in a portion other than the installation part 6.

In addition, since each rack 4 can be individually removed and recovered from the installation part 6, it is unnecessary to recover the rack 4 to be recovered after waiting for inspection to be completed for all the rack units of the installation part 6, or to collect recoverable racks at a portion for rack recovery. Further, in this way, it is possible to proceed with the operation up to recovery of the racks 4 which can be successively added without delay as much as possible.

As described above, the autosampler 1 of the present embodiment has a compact configuration. Further, in the present embodiment, in order to further improve the performance of the autosampler 1, sampling (post-reagent amount check sampling) is performed after checking the amount of reagent required for inspection. Hereinafter, a description will be given of a feature of the post-reagent amount check sampling. However, in describing the post-reagent amount check sampling, first, a description will be given of an example of conventional sampling in which the amount of reagent is not checked in advance. Note that the term "sampling" is used in the same meaning as the above-mentioned "collecting".

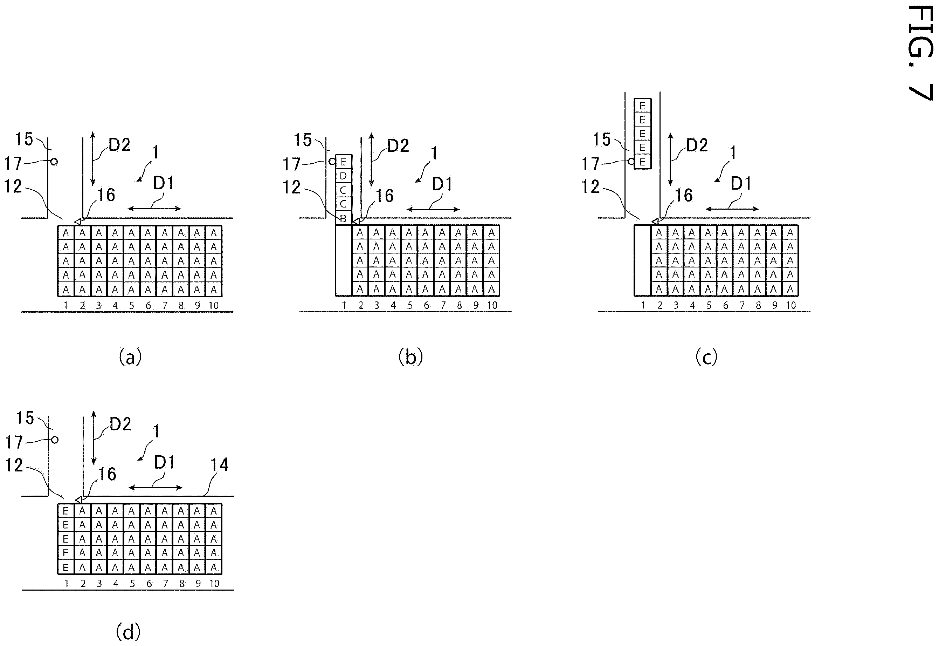

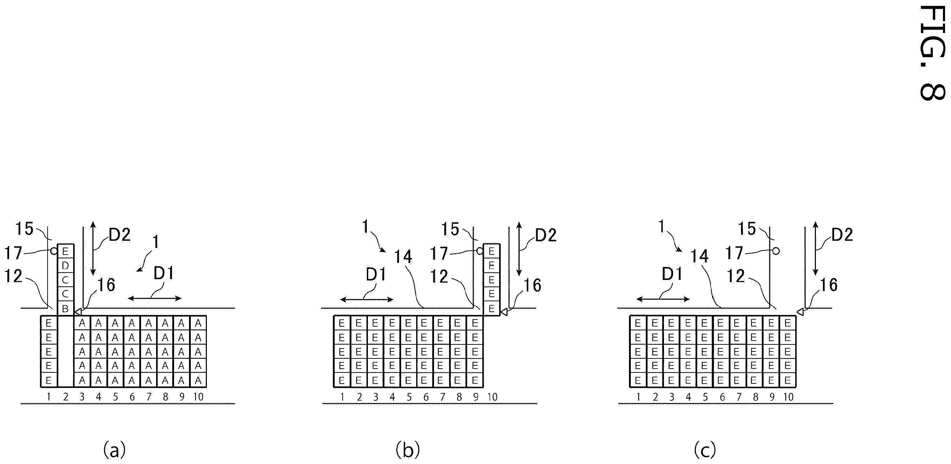

Figs. 7 (a) to 7 (d) and Figs. 8 (a) to 8 (c) illustrate a conventional sampling mode in which the amount of reagent is not checked in advance. Note that here, a description will be given using an example in which the installation part is movable similarly to the automatic analysis device shown in the above-mentioned Patent Document 2 unlike the autosampler 1 of the present embodiment illustrated in Fig. 1(a). However, the same reference symbol is used for a similar part to that of the autosampler 1 of the present embodiment illustrated in Fig. 1 (a) except that the installation part is movable. Further, even though Figs. 7 and 8 illustrate a plurality of specimen containers (3) and racks (4), reference symbols for these parts are not illustrated to avoid complicating the figures.

In Fig. 7(a), ten racks are arranged side by side from the left side to the right side in the figure. In the figure, for the sake of description, numbers "1" to "10" are assigned corresponding to the installation positions (sections) of the respective racks. In the following, the racks installed at the respective positions may be referred to as "first rack" to "tenth rack" in combination with numbers as necessary.

The longitudinal direction of each rack is oriented in a vertical direction in the figure, and each rack holds five specimen containers as described above. In the following, the respective specimen containers for each rack may be referred to as a "first container" to a "fifth container" in the order from the upper side to the lower side in the figure. Further, when the respective specimen containers are individually distinguished, for example, the specimen containers are referred to as "the first container of the first rack", "the third container of the fifth rack", "the fifth container of the tenth rack", etc.

Here, in the figure, each specimen container is indicated by reference symbol "A", and the meaning represented by reference symbol A will be described later. Further, in Figs. 7(a) to 7(d) and Figs. 8(a) to 8(c), for simplification, the reading part 16 is indicated by a triangle mark, and the specimen collection mechanism 17 is indicated by a circle mark (O).

As described above, a state illustrated in Fig. 7(a) is a state in which ten racks are mounted on the installation part (6) . Further, Fig. 7(a) illustrates a state in which ten racks move in a direction from right to left (forward direction) in the figure along the first movement direction D1 on the transfer part transport path 14 (indicated by an alternate long and two short dashes line in Fig. 1(a)), and then stops at a predetermined position.

The first rack located at the left end in Fig. 7 (a) reaches the transport position 12. Further, in Fig. 7(a), identification information (ID information) is not read (ID identification is not performed) by the identification information recording part 27 in any of the specimen containers. Further, the above-mentioned reference symbol A assigned to each specimen container indicates that ID identification has not been performed for each specimen container.

In addition, as a state of the specimen container, there are a state of "ID identified (ID reading succeeded)" (reference symbol B), a state where "inspection request content is being inquired about" (reference symbol C), a state of "inspection request content received" (reference symbol D), and a state of "sampling in progress or sampling completed" (reference symbol E).

The state of "ID identified (ID reading succeeded) " indicated by reference symbol B is a state in which identification information is read by the reading part 16 and the reading is completed (successfully) without delay without causing an error, etc. Further, the state where "inspection request content is being inquired about" indicated by reference symbol C is a state in which the read identification information is transmitted from the controller 31 to a host computer 41 (Fig. 2) as the management computer, and reception of inspection request content information from the host computer 41 is waited for. Here, the host computer 41 is disposed outside the automatic analysis device 2.

Furthermore, the state of "inspection request content received" indicated by reference symbol D is a state in which reception of the inspection request content information from the host computer 41 is completed. Further, the state of "sampling in progress or sampling completed" indicated by reference symbol E is a state in which sampling is being performed based on the inspection request content information or a state in which sampling is completed.

From the state in which ID identification has not been performed for any of the specimen containers as illustrated in Fig. 7(a) (state A), the first rack reaching the transport position 12 is sent out to the rack transport path 15 as illustrated in Fig. 7 (b). In the example of Fig. 7 (b), the first container of the first rack is in the state of "sampling in progress or sampling completed" indicated by reference symbol E. Further, the second container is in the state of "inspection request content received" indicated by reference symbol D, and the third container and the fourth container are in the state where "inspection request content is being inquired about" indicated by reference symbol C. Furthermore, the fifth container is in the state of "ID identified (ID reading succeeded)" indicated by reference symbol B.

That is, when the first rack is sent out to the rack transport path 15, although not illustrated, first, the first container reaches the front of the reading part 16 and stops. Then, identification information displayed on the identification information recording part 27 (Figs. 1(b) and 1(c)) of the first container is read by the reading part 16. When reading of the identification information related to the first container is completed (successfully) (reference symbol B), the read identification information is transmitted to the host computer 41 via the controller 31.

The host computer 41 searches for the inspection request content based on the received identification information. Then, information about the searched inspection request content (inspection request content information) is transmitted to the controller 31. The inspection request content includes information about items (inspection items) to be inspected for the specimen (blood, urine, etc.) contained in the specimen container (inspection item information) . Then, the controller 31 determines the required amount of specimen to be dispensed for each inspection item based on the received inspection request content.

In the controller 31, data in an analysis information table is stored in a predetermined storage means. In the analysis information table, a condition of sampling or analysis to be performed for the inspection request content is set. Further, the controller 31 controls operations such as sampling, analysis, and cleaning by referring to the analysis information table based on the inspection request content received from the host computer 41.

Then, with regard to the host computer 41, the identification information is successively transmitted to the host computer 41 each time reading of the identification information recording part 27 for each specimen container is completed (successfully) (reference symbol B). For this reason, as indicated by reference symbol B in Fig. 7(b), at a stage when ID reading related to the identification information of the fifth container is successful, transmission of the identification information related to the first container to the fourth container, which has been previously read, to the host computer 41 has been completed.

Further, in the example of Fig. 7(b), the third container and the fourth container are in the state of waiting for reception of the inspection request based on the transmitted identification information (reference symbol C). Further, with respect to the second container, the inspection request content from the host computer 41 is received through the state of reference symbol C, and the second container is in the state of reference symbol D (the state of inspection request content received). Further, the first container is in the state of reference symbol E (state of sampling in progress or state of sampling completed) based on the inspection request content from the host computer 41.

When sampling of the first container is completed as described above, the first rack moves further in the forward direction and transports the second container to the sampling position. Then, sampling is performed for the second container, and sampling of the second container is completed (reference symbol E). In this instance, although not illustrated, the third to fifth containers are in the state of "inspection request content received" (reference symbol D) or the state where "inspection request content is being inquired about" (reference symbol C).

In addition, depending on the progress status of reading by the reading part 16, the processing status of the controller 31, or the processing status of the host computer 41, one of the specimen containers may be in the state of "ID identified (ID reading succeeded)". Further, although reference symbol is not assigned, depending on the status, one of the specimens may be in the state of ID identification (ID reading).

In the examples illustrated in Figs. 7 and 8, when sampling for a specimen container for which identification information is previously read is completed, sampling for a next container is performed. For this reason, in a status in which sampling is performed for the fifth container, as illustrated in Fig. 7(c), all the specimen containers in the first rack are in the state indicated by reference symbol E (the state of sampling in progress or the state of sampling completed).

Thereafter, as illustrated in Fig. 7(d), the first rack is transported in the backward direction on the rack transport path 15 and returned to the installation part (reference symbol omitted) on the transfer part transport path 14 (indicated by an alternate long and two short dashes line in Fig. 1(a)). Further, the racks (rack group) on the installation part move forward in the rack transport path 15, the second rack is sent to the transport position 12, and the rack group stops. Then, as illustrated in Fig. 8 (a), the second rack is sent out to the rack transport path 15.

Further, although not illustrated, as in the case of the first rack, through reading of the identification information for the first container to the fifth container (reference symbol B), inquiring of the host computer 41 about the inspection request content (reference symbol C) and reception of the inspection request content from the host computer 41 (reference symbol D) are successively performed for each specimen container. Further, in response to reception of the inspection request content (reference symbol D) for each specimen container, a sampling condition is determined, and sampling is executed according to the condition (reference symbol E).

In the example of Fig. 8(a), the first container is in the state of sampling in progress or the state of sampling completed (reference symbol E), and the second container is in the state of inspection request content received (reference symbol D). Further, the third container and the fourth container are in the state where inspection request content is being inquired about (reference symbol C), and the fifth container is in the state of ID identified (ID reading succeeded) (reference symbol B).

In this way, sampling is performed for each specimen container for the subsequent racks, and when sampling for the fifth container of the tenth rack is completed as illustrated in Fig. 8 (b) (reference symbol E), sampling for all the specimen containers in the first rack to the tenth rack is completed. Then, the tenth rack moves backward toward the transport position 12 on the rack transport path 15, and the tenth rack is returned to the installation part (reference symbol omitted) as illustrated in Fig. 8(c).

The conventional sampling procedure described above can be summarized and described as the following items (1) to (5). First, (1) the identification information is read by the reading part 16. (2) The controller 31 inquires of the host computer 41 about the inspection items, and (3) the inspection item content (inspection item content information) is received from the host computer 41. Subsequently, (4) the sampling condition according to the inspection items is determined, and (5) sampling is executed.

However, when it takes a relatively large amount of time for inquiring of the host computer 41 about the inspection item or for response as described in items (2) and (3) above, the subsequent processing is delayed. For example, the start of sampling in (5) is delayed. Depending on the scale of a hospital that uses the automatic analysis device 2, when the number of other analysis devices communicating with the host computer 41, the amount of communication, the number of relay points, etc. are large, such a state is likely to occur, and start of sampling is delayed by this amount. Then, due to the delay in sampling, the subsequent series of processing and operations will be delayed.

Further, the delay in the start of sampling leads to delay in start of sampling for the next and subsequent specimen containers, and a time required for the inspection as a whole becomes long. Then, due to the delay in the inspection, reporting a result to a subject is delayed, which hinders early utilization of an inspection result for treatment. In addition, due to the delay in the inspection, the processing capacity (the number of processes that can be processed within a certain period of time) in the autosampler 1 and the automatic analysis device 2 is reduced.

Further, when the inspection item content is received from the host computer 41 according to item (3) described above, the autosampler 1 (and the automatic analysis device 2) can detect the inspection item. Then, when the inspection item is detected, the required amount of the reagent to be used for the inspection is found for the autosampler 1 (and the automatic analysis device 2). For this reason, the controller 31 can determine whether or not the remaining amount of the reagent is sufficient for the specimen container for which the inspection request content can be detected by calculating the remaining amount of the reagent, and notify the operator of a determination result by a display device (not illustrated) provided in the automatic analysis device 2, etc.

However, when it takes a lot of time for inquiring about the inspection items or response as described above, a situation where items to be inspected and the number of measurements (the number of specimen containers) are unknown continues for a long time, and determination as to whether or not measurement is allowed is delayed accordingly. In addition, the reagents may be insufficient during the measurement without knowing the required amount of the reagents used for the measurement. Then, in such a case, the measurement is interrupted and the inspection result may not be promptly obtained.

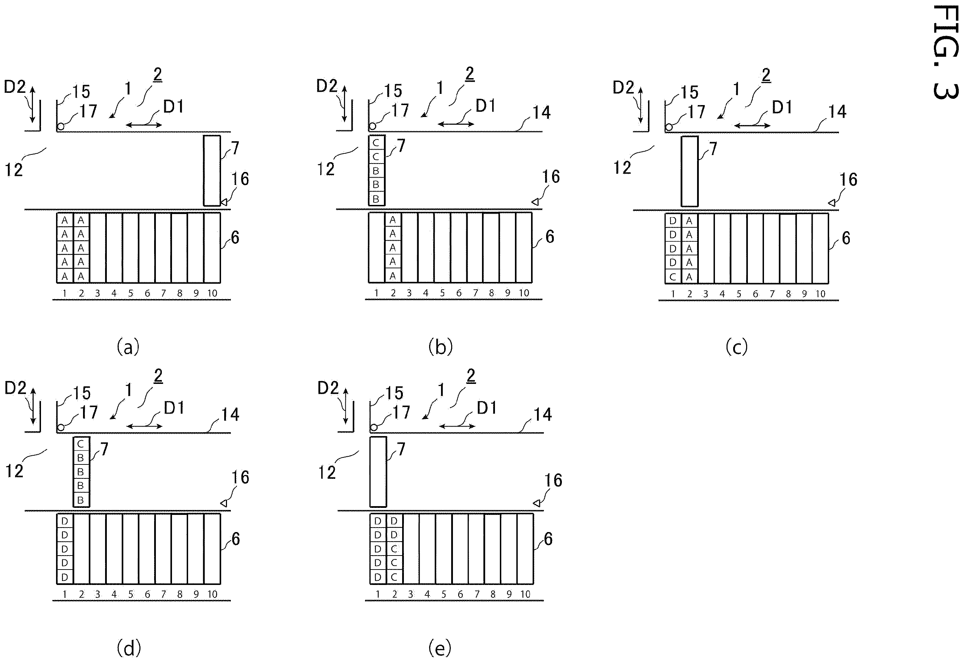

Since the conventional sampling has such circumstances, in the present embodiment, as described above, the post-reagent amount check sampling is performed. In the following, an example of the post-reagent amount check sampling will be described based on Figs. 3 to 6. Note that the same number or the same reference symbol is assigned to a similar item to that of the conventional sampling illustrated in Figs. 7(a) to 7(d) and Figs. 8(a) to 8(c), and a description thereof will be omitted as appropriate.

Fig. 3(a) illustrates the installation part 6, the transfer part 7, the rack transport path 15, etc. In addition, in this state, only the first rack and the second rack are installed in the installation part 6, and no racks are installed in the other installation regions. Further, in this state, no rack is placed on the transfer part 7. Note that the number of racks in the installation part 6 may be any number in a range of three to ten, or may be only one.

As illustrated in Fig. 3(b), the first rack in the state of Fig. 3(a) moves from the installation part 6 to the transfer part 7. By the operation of this first rack, the installation region for the first rack in the installation part 6 becomes empty. Further, the above-mentioned reading part 16 irradiates detection light to read identification information of the rack or the specimen container. Here, the position of the identification information recording part (26) in each rack is a position at which reading by the reading part 16 is easy. In addition, as described above, the reading part 16 may be moved to read the identification information.

The read identification information is transmitted to the host computer 41 by the controller 31 (Fig. 2). Further, the controller 31 transmits the identification information to the host computer 41 to inquire about measurement request content without waiting for completion of ID identification for next and subsequent specimen containers (or start of ID identification for next and subsequent specimen containers).

In the example of Fig. 3(b), reading of the identification information related to the first rack and the first container to the fifth container is previously completed. Further, the first container and the second container located on the forward direction side of the second movement direction D2 are in the state where "inspection request content is being inquired about" indicated by reference symbol C. In addition, the third container to the fifth container are in the state of "ID identified (ID reading succeeded)" indicated by reference symbol B.

Subsequently, as illustrated in Fig. 3(c), the first rack is returned to the installation part 6. In the example of Fig. 3(c), the first container to the fourth container are in the state of "inspection request content received" indicated by reference symbol D. Further, the fifth container is in the state where "inspection request content is being inquired about" (reference symbol C). In addition, the reading part 16 moves in the backward direction (direction from left to right in the figure) in the first movement direction D1 and returns to the original standby position.

Further, as illustrated in Fig. 3(d), the second rack installed in the installation part 6 moves to the transfer part 7. The reading part 16 irradiates detection light to read identification information of the second rack or the specimen container held in the second rack. In the example of Fig. 3 (d), the first container is in the state where "inspection request content is being inquired about" (reference symbol C). In addition, the second container to fifth container are in the state of "ID identified (ID reading succeeded)" (reference symbol B). Further, all the specimen containers in the first rack are in the state of "inspection request content received" (reference symbol D).

When reading of the identification information for all the specimen containers in the second rack is completed, the second rack is returned to the corresponding position (installation region for the second rack) in the installation part 6 as illustrated in Fig. 3 (e). In the example of Fig. 3(e), the first container and the second container in the second rack are in the state of "inspection request content received" (reference symbol D). In addition, the third container to the fifth container are in the state where "inspection request content is being inquired about" (reference symbol C). Then, the reading part 16 returns to the original standby position.

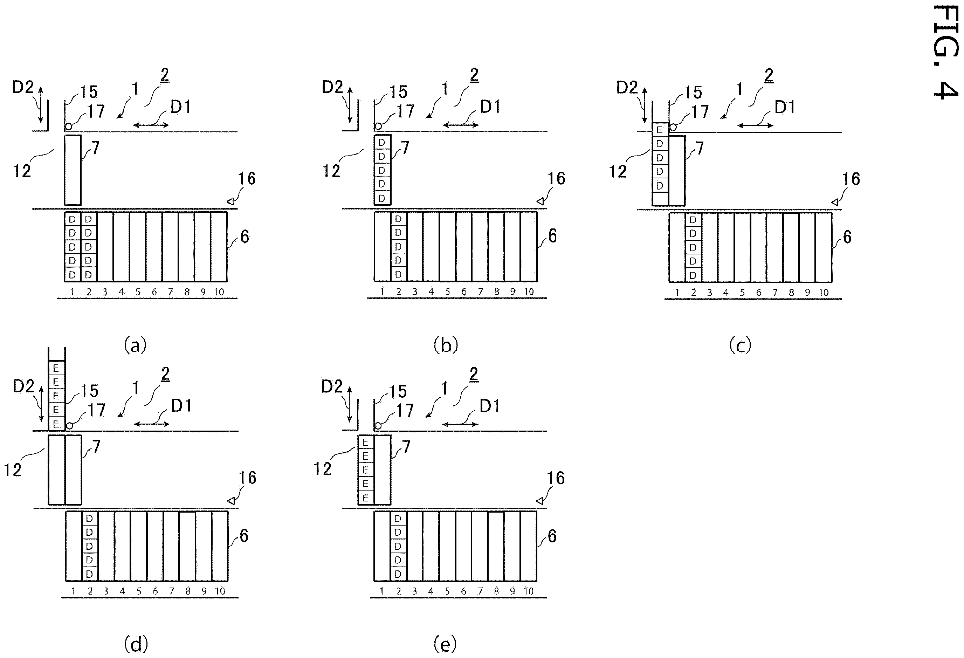

Subsequently, as illustrated in Fig. 4(a), all the specimen containers in the second rack are in the state of "inspection request content received" (reference symbol D). In the example described here, two racks, that is, the first rack and the second rack, are used as reagent amount check units . For this reason, when inspection request content is received (reference symbol D) for all the specimen containers in the second rack, reagent amount check is completed.

Thereafter, the first rack in the installation part 6 is sent to the transfer part 7 as illustrated in Fig. 4(b). Further, the transfer part 7 is moved in the forward direction (direction from right to left in the figure) of the first movement direction D1, and the first rack moved to the transfer part 7 is moved to the transport position 12 in the rack transport path 15. Then, as illustrated in Fig. 4(c), the first rack at the transport position 12 is transported in the forward direction (direction from bottom to top in the figure) of the second movement direction D2 by a distance corresponding to one specimen container, and sampling for the first container is performed (reference symbol E).

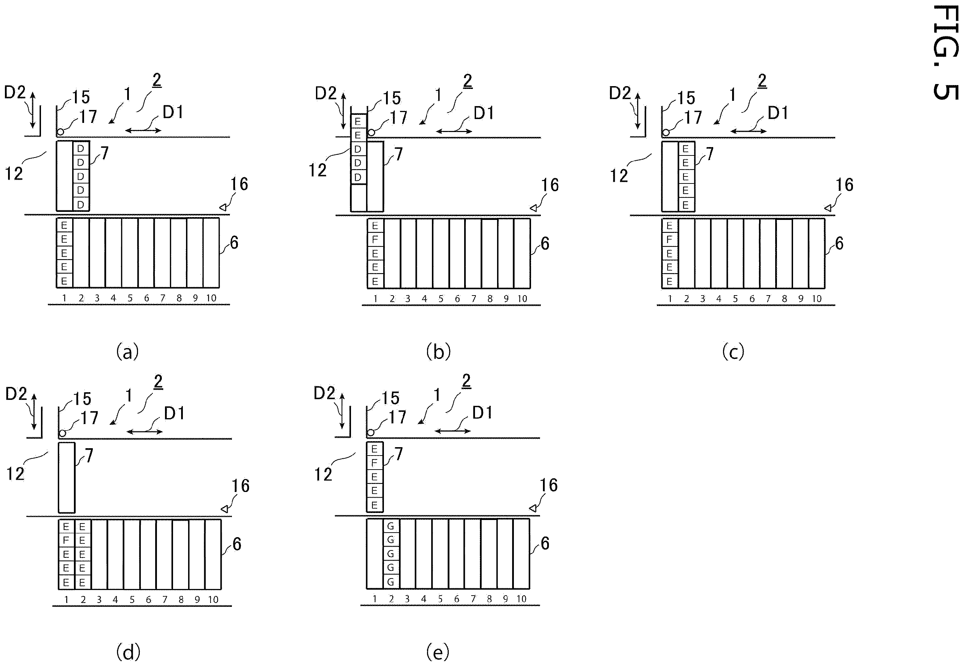

Further, sampling is successively performed for the second container to the fifth container in the first rack to obtain a state where sampling is performed for all the specimen containers in the first rack as illustrated in Fig. 4(d) (reference symbol E). Then, the first rack is returned to the transfer part 7 as illustrated in Fig. 4(e) and further sent to the installation part 6 as illustrated in Fig. 5(a).

Thereafter, as illustrated in Fig. 5(a), the second rack in the installation part 6 is sent to the transfer part 7. In the example of Fig. 5(a), the transfer part 7 moves temporarily in the backward direction of the first movement direction D1, and the first rack is returned to the corresponding position in the installation part 6 (installation region for the first rack). Then, the second rack in the installation part 6 is sent out to the transfer part 7.

Subsequently, the transfer part 7 is moved in the forward direction of the first movement direction D1, and the second rack in the transfer part 7 is transported to the transport position 12 in the rack transport path 15. Then, as illustrated in Fig. 5(b), the second rack at the transport position 12 is transported in the forward direction of the second movement direction D2, and sampling is successively executed (reference symbol E). In the example of Fig. 5(b), sampling is performed for the first container and the second container (reference symbol E), and the third container to fifth container are still in the state of "inspection request content received" (reference symbol D).

In addition, in the example of Fig. 5 (b), the second container in the first rack installed in the installation part 6 is in the "re-inspection" state indicated by reference symbol F. This "re-inspection" state is a state in which even though sampling is performed and analysis is temporarily performed, re-inspection is required. Handling of the specimen container in the "re-inspection" state (reference symbol F) will be described later.

When sampling is completed for all the specimen containers in the second rack illustrated in Fig. 5(b), the second rack is returned to the transfer part 7 as illustrated in Fig. 5(c). Here, from the state of Fig. 5(b) to the state of Fig. 5(c), although not illustrated, the transfer part 7 is moved backward in the first movement direction D1.

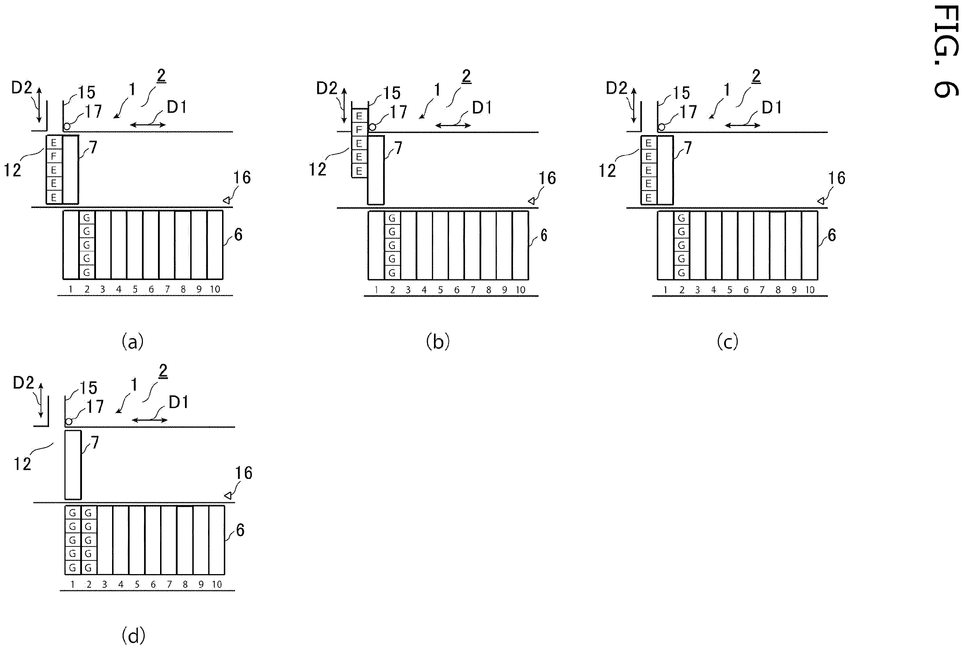

Further, as illustrated in Fig. 5(d), the second rack is returned to the installation part 6. Then, as illustrated in Fig. 5(e), the first rack holding the specimen container of the re-inspection (reference symbol F) is sent to the transfer part 7, and the transfer part 7 is moved in the forward direction of the first movement direction D1 as illustrated in Fig. 6(a). Here, in the example of Fig. 5(e), the second rack returned to the installation part 6 does not require re-inspection, and all the specimen containers are in a state of "inspection completed" indicated by the reference symbol G.

Following the state illustrated in Fig. 6(a), as illustrated in Fig. 6(b), the first rack sent to the transfer part 7 is transported in the forward direction of the second movement direction D2, and sampling for the second container is performed. Thereafter, as illustrated in Fig. 6(c), the first rack is returned to the transfer part 7. In the example of Fig. 6(c), the second container in the first rack is in the state where sampling is performed (reference symbol E).

Further, the transfer part 7 is moved in the backward direction of the first movement direction D1, and the first rack is returned to the installation part 6 as illustrated in Fig. 6(d). In the example of Fig. 6(d), all the specimen containers in the first rack are in the state of inspection completed (reference symbol G).

According to the post-reagent amount check sampling described above, as illustrated in Fig. 4(a), inspection items are determined for all the specimen containers in the first rack and the second rack, which are used as reagent amount check units. Further, thereafter, sampling is performed in order from the first container in the first rack based on the inspection request content from the host computer 41. Note that when the inspection request is registered in the automatic analysis device in advance, sampling is performed based on the inspection request content. Therefore, for a group of specimen containers installed in the installation part 6, sampling can be started after detecting the inspection request content in advance in order from the first container in the first rack. Then, it becomes possible to detect the required amount of the reagent before the start of sampling for the group of specimen containers.

Further, before sampling, it is possible to detect the number of measurements for each inspection item for all specimen containers of a predetermined amount (here, corresponding to two racks), which are reagent amount check units. Then, in the controller 31, when it can be determined that the reagent is not insufficient during measurement, sampling can be started, and when it can be determined that the reagent is insufficient, this fact can be reported to encourage the operator to replenish the reagent.

When the amount of reagent used can be determined by checking the amount of reagent in this way, the timing of reagent replenishment or replacement can be appropriately reported. In addition, it is possible to prevent unnecessary replenishment of the reagent and replacement after the start of measurement.

In addition, by detecting the time required for measurement in the reagent amount check unit in advance, it is possible to report a scheduled measurement end time for all the set specimen containers.

For example, in a facility such as a hospital, an operator generally carries and uses a plurality of devices . For this reason, after starting analysis in the automatic analysis device 2, it may be desired to be aware of a time from when another device is operated until returning to the automatic analysis device 2 to be able to set a subsequent specimen (specimen container). Then, in such a case, when inspection request content information is accumulated based on specimen identification information using a plurality of specimen containers as a set (as reagent amount check units), the reagent amount is checked, and then sampling is allowed to start, it becomes easily for the operator to determine a subsequent action, and work of the operator can be streamlined.

In addition, since sampling is started after accumulating inspection request content information for a predetermined number of (5 × 10 in this case) specimen containers, which are reagent amount check units, it is possible to promptly respond to occurrence of a problem when compared to a case where sampling is started while receiving inspection request content information for each specimen container (the case of the conventional sampling illustrated in Figs. 7 and 8) .

That is, in the above-mentioned conventional sampling (Figs. 7 and 8), since sampling is started while receiving inspection request content information for each specimen (specimen container), for example, when the second and subsequent specimen containers are in the state of ID identification (reference symbol B) or the state where inspection request content is being inquired about (reference symbol C), sampling may be started for a specimen container receiving inspection request content earlier.

However, in the case of occurrence of a problem such as a reading error for the identification ID or a reception error for inspection request content information in a subsequent specimen container during sampling, the corresponding rack may not be taken out, and it is difficult to take a prompt action to solve the problem. In addition, even when it is possible to take some measures to solve the problem, as described above, the operator leaves the automatic analysis device 2 after start of analysis in many cases. Further, when the operator returns to the automatic analysis device 2, the inspection may not be completed due to the interruption of the analysis (the inspection result acquisition may be delayed).

Therefore, by performing the post-reagent amount check sampling illustrated in Figs. 3 to 6, it is possible to complete reception of the inspection request content related to the predetermined number of (5 × 2 in this case) specimen containers, which are reagent amount check units, before start of sampling, and it is possible to prevent analysis from being interrupted as much as possible due to a problem caused by exchanging information with the host computer 41.

Note that even in a case where the post-reagent amount check sampling is performed, when the operator leaves the automatic analysis device 2 before reception of the inspection request contents related to all the specimen containers, analysis may be interrupted. However, since sampling is to be started, a time until occurrence of a problem related to exchange of information with the host computer 41 is limited to a short time required for ID identification or information communication. Further, by predetermining a business procedure in advance such that the operator leaves the automatic analysis device 2 after the information communication is completed, it is possible to prevent a problem occurring before the start of sampling from being left unattended, and to make effective use of the time. In addition, before the start of sampling, the rack can be taken out relatively easily, and an operation for checking and solving a problem becomes easy.

In addition, in general, in inspection by the automatic analysis device, even though the reagents used are different, measurement of the same type of measurement method may be continuously performed. Further, in a case where the automatic analysis device 2 of the present embodiment includes a plurality of photometric units used for a specific inspection, when there is an inspection request exceeding the number of photometric units, sampling of specimens scheduled for measurement using the photometric units is temporarily suspended, and measurement using the photometric units is completed first in some cases. As a countermeasure, by allowing start of sampling after accumulating the inspection request content information in advance using the post-reagent amount check sampling, it is possible to set the optimum priority according to various measuring means such as the photometric units.

Further, by performing the post-reagent amount check sampling, (1) it is possible to determine whether or not materials used for measurement are more than the number of measurements to be performed (measurement allowance determination) using, for example, the controller 31 as a measurement allowance determining means. Examples of the materials used for the measurement include system water, cuvette, reagent, detergent, etc. In addition, by performing the post-reagent amount check sampling, it is possible to determine the necessity of disposing of wastewater in a wastewater tank. Further, (2) it is possible to estimate a measurement time from now on, and for example, it is possible to predict a time until the measurement is completed in units of specimen containers (specimens) or in units of racks. Further, from the above items (1) and (2), it is possible to determine the replenishment timing such as whether the materials used for the measurement needs be replenished now or after the measurement.

Here, the above-mentioned "materials used for the measurement" can be referred to as "measurement resources". The "measurement resources" include the reaction vessel such as the above-mentioned cuvette. Further, the autosampler 1 and the automatic analysis device 2 can be configured so as to make a notification of measurement not allowed and suspend the measurement operation when it is determined that any of the measurement resources is insufficient by the above-mentioned measurement allowance determination.

Further, from these facts, according to the autosampler 1 and the automatic analysis device 2 of the present embodiment, it is possible to efficiently perform measurement with a small configuration, and further increase the performance of the small autosampler 1 or automatic analysis device 2. Further, according to the autosampler 1 and the automatic analysis device 2 of the present embodiment, it is possible to realize three functions of (1) determination of inspection items of all racks installed before start of measurement (post-reagent amount check sampling), (2) priority interrupt of racks, (3) automatic re-inspection based on an initial inspection result.

Here, the above-mentioned Patent Document 1 (JP 2010-181197 A) describes that analysis is performed in an advanced order of analysis (paragraph 0050, etc.). However, the invention described in Patent Document 1 determines the analysis order by a rack buffer part, and is different from the autosampler 1 and the automatic analysis device 2 of the present embodiment in which the amount of the reagent is checked with the position of the rack 4 at the same installation part 6 as that at the time of initial mounting, so that the optimal priority can be determined while taking advantage of miniaturization.

In addition, both a function of the post-reagent amount check sampling and a function of the conventional sampling may coexist in one autosampler 1 or automatic analysis device 2, and the operator may switch the functions as necessary to perform sampling and analysis.

Note that in the embodiment, a state in which two racks 4 (first rack and second rack) are installed in the installation part 6, and the maximum number of (here, five) specimen containers 3 that can be held are held in the rack 4 is given as an example. However, the number of racks to be handled and the number of specimen containers are freely set within the maximum number thereof that can be installed (5 × 10 in this case).

For example, in a hospital that has an inpatient ward and many inpatients, a large number of specimens collected for inspection are gathered during the morning hours of the day, specimens of outpatients, etc. are brought in at any time during the subsequent hours, and a gathering condition of the specimen containers 3 (specimens) fluctuates. Further, even when there is a vacancy in the installation part 6 or the rack 4, the autosampler 1 and the automatic analysis device 2 of the present embodiment can perform the post-reagent amount check sampling using a specimen container on the installation part 6 as a unit at that time. That is, the post-reagent amount check sampling can be performed while changing the unit for checking the reagent amount according to the status.

In addition, the autosampler 1 and the automatic analysis device 2 of the present embodiment can perform sampling for a rack or a specimen container added in the middle of post-reagent amount check sampling while adjusting the order by a small configuration. In addition, sampling for racks added later can be performed in preference to a rack for which inspection request content is inquired about.

Note that the invention can be variously modified without departing from the gist.

### EXPLANATIONS OF LETTERS OR NUMERALS

1 AUTOSAMPLER
2 AUTOMATIC ANALYSIS DEVICE
3 SPECIMEN CONTAINER
4 RACK
6 INSTALLATION PART
7 TRANSFER PART
11 TRANSFER PART MOVEMENT MECHANISM (TRANSFER PART MOVING MEANS)
12 TRANSPORT POSITION
13 FIRST RACK MOVEMENT MECHANISM (RACK MOVING MEANS)
14 TRANSFER PART TRANSPORT PATH
15 RACK TRANSPORT PATH
16 READING PART
17 SPECIMEN COLLECTION MECHANISM
19 SECOND RACK MOVEMENT MECHANISM (RACK MOVING MEANS)
20 THIRD RACK MOVEMENT MECHANISM (RACK MOVING MEANS)
26, 27 IDENTIFICATION INFORMATION RECORDING PART
31 CONTROLLER
32 TRANSFER PART MOVEMENT PROCESSING UNIT (TRANSFER PART MOVING MEANS)
33 RACK MOVEMENT PROCESSING UNIT (RACK MOVING MEANS)
41 HOST COMPUTER

## Claims

1. An autosampler for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the autosampler comprising:
an installation part allowing a plurality of racks to be installed therein;
a transfer part capable of holding one rack installed in the installation part and moving back and forth in a first movement direction along an installation direction; and
a rack transport path used to move the rack held by the transfer part back and forth in a second movement direction intersecting the first movement direction,
wherein the transfer part is moved forward in the first movement direction to transfer the rack present in the installation part to a side of the rack transport path, and the transfer part is moved backward in the first movement direction to send the rack present in the rack transport path back to a side of the installation part.

2. The autosampler according to claim 1, wherein the installation part waits for the rack after inquiring about the inspection item until the sampling, and the sampling is started after completing accumulation of information about the inspection item using the specimen container on the installation part as a unit.

3. An automatic analysis device comprising the autosampler according to claim 1 or 2.

4. A sampling method for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device,
the method using an autosampler including
an installation part allowing a plurality of racks to be installed therein,
a transfer part capable of holding one rack installed in the installation part and moving back and forth in a first movement direction along an installation direction, and
a rack transport path used to move the rack held by the transfer part back and forth in a second movement direction intersecting the first movement direction,
the method comprising:
a first step of moving the transfer part forward in the first movement direction to transfer the rack present in the installation part to a side of the rack transport path;
a second step of waiting for, by the installation part, the rack after inquiring about the inspection item until the sampling, and starting the sampling after completing accumulation of information about the inspection item using the specimen container on the installation part as a unit; and
a third step of moving the transfer part backward in the first movement direction to send the rack present in the rack transport path back to a side of the installation part.

5. A method of automatically inspecting a specimen performed using a specimen sampled by the sampling method according to claim 4.
